# EUROPEAN PATENT SPECIFICATION

(11) **EP 4 548 167 B1**
(45) Date of publication and mention of the grant of the patent: **02.12.2026**
(21) Application number: 23751124.1
(22) Date of filing: 30.06.2023
(51) Int. Cl.: G05D 1/661, G05D 1/242, G05D 105/28, G05D 107/80, G05D 109/10

(54) **DOCKING SYSTEM AND METHOD FOR AUTONOMOUS TRANSPORT VEHICLES**
ANDOCKSYSTEM UND -VERFAHREN FÜR AUTONOME TRANSPORTFAHRZEUGE
SYSTÈME ET PROCÉDÉ D'ACCOSTAGE POUR VÉHICULES AUTONOMES DE TRANSPORT

(30) Priority: 01.07.2022 SG 10202250357T
(43) Date of publication of application: 07.05.2025
(73) Proprietor: Venti Technologies, Singapore 079903 (SG)
(72) Inventor: QIN, Lei, Singapore 271023 (SG); ABOLFAZLI ESFAHANI, Mahdi, Singapore 368063 (SG); DU, Xinxin, Singapore 642675 (SG)
(74) Representative: Holzwarth-Rochford, Andreas
(86) International application number: PCT/SG2023/050464
(87) International publication number: WO 2024/005718

(56) References cited:
- KR-B1- 102 261 791
- QUILEZ ROBERTO ET AL: "Docking autonomous robots in passive docks with Infrared sensors and QR codes", PROCEEDINGS OF THE 10TH EAI INTERNATIONAL CONFERENCE ON TESTBEDS AND RESEARCH INFRASTRUCTURES FOR THE DEVELOPMENT OF NETWORKS & COMMUNITIES, 1 January 2015 (2015-01-01), XP055822756, ISBN: 978-1-63190-070-9, Retrieved from the Internet <URL:https://pdfs.semanticscholar.org/da71/ea4d6c56680845bf0b6fab731dd4dd5e7d05.pdf> [retrieved on 20250327], DOI: 10.4108/icst.tridentcom.2015.259673
- VONGBUNYONG S ET AL: "Automatic precision docking for autonomous mobile robot in hospital logistics - case-study: battery charging", IOP CONFERENCE SERIES: MATERIALS SCIENCE AND ENGINEERING, vol. 1137, no. 1, 2 May 2021 (2021-05-02), GB, pages 012060, XP093079020, ISSN: 1757-8981, Retrieved from the Internet <URL:https://iopscience.iop.org/article/10.1088/1757-899X/1137/1/012060/pdf> [retrieved on 20230905], DOI: 10.1088/1757-899X/1137/1/012060
- ZHANG XIAOFAN ET AL: "Automatic Docking and Charging of Mobile Robot Based on Laser Measurement", 2021 IEEE 5TH ADVANCED INFORMATION TECHNOLOGY, ELECTRONIC AND AUTOMATION CONTROL CONFERENCE (IAEAC), IEEE, vol. 5, 12 March 2021 (2021-03-12), pages 2229 - 2234, XP033895281, DOI: 10.1109/IAEAC50856.2021.9390995
- TEKKÖK SERCAN ÇAGDAS ET AL: "A Novel Docking Algorithm Based On The LiDAR And The V-shape Features", EUROPEAN JOURNAL OF SCIENCE AND TECHNOLOGY SPECIAL ISSUE 26, 23 June 2021 (2021-06-23), pages 35 - 40, XP093079136, Retrieved from the Internet <URL:https://dergipark.org.tr/en/download/article-file/1805329> [retrieved on 20230906], DOI: 10.31590/ejosat.947521

## Description

### PRIORITY CLAIM

The present application claims priority to Singapore Application No. 10202250357T, filed July 1 , 2022.

### TECHNICAL FIELD

The subject matter described herein relates to a method for autonomously docking an autonomous vehicle, docking systems for autonomous vehicles as well as a non-transitory computer program product.

### BACKGROUND

Automation is the use of computing systems to accomplish various tasks without the need of human intervention. Various industries utilize automation to complete tasks, for example, to reduce costs and/or improve efficiency. Example industries include the automotive industry and shipping industry. VONGBUNYONG, S., Thamrongaphichartkul, K., Worrasittichai, N., Takutruea, A.: Automatic precision docking for autonomous mobile robot in hospital logistics - case-study: battery charging (In: IOP Conference Series: Materials Science and Engineering, Vol. 1137, 2021, 012060. doi: 10.1088/1757-899X/1137/1/012060) relates to a method for automatic precision docking of an autonomous mobile robot used in hospital logistics, wherein a Lidar sensor on the robot detects a geometrical marker attached to a docking station to determine the relative position and orientation of the robot with respect to the station. The robot navigates through several docking states including approaching a pre-contact point, aligning with the station, and moving to a contact point for battery charging. ZHANG, X., Li, X., Zhang, X.: Automatic Docking and Charging of Mobile Robot Based on Laser Measurement (In: 2021 IEEE 5th Advanced Information Technology, Electronic and Automation Control Conference (IAEAC), 2021, S. 2229-2234. doi: 10.1109/IAEAC50856.2021.9390995) relates to a method for automatic docking and charging of a mobile service robot based on laser sensor measurements, wherein features of a docking station are recognized from laser scanning data using a breakpoint detection, inflection point detection and line segment fitting algorithm, and wherein a multi-state staged stabilization control method is used to drive the robot to the docking station based on angle deviation and distance deviation. TEKKÖK, S. Ç., Bostanci, B., Söyünmez, M. E., Oǧuz Ekim, P.: A Novel Docking Algorithm Based On The LiDAR And The V-shape Features (In: European Journal of Science and Technology, Special Issue 26, S. XX-XX, July 2021) relates to a docking method for a nonholonomic mobile robot using a LiDAR sensor and a V-shaped feature placed on a charging station, wherein the V-shaped feature is localized by matching synthetically generated reference data with current LiDAR scans, a trajectory is generated using a quintic polynomial, and a PID controller is employed to track the generated path and correct the robot's heading angle during docking. KR 10 2261791 B1 relates to an autonomous docking system for a mobile robot, wherein the robot is equipped with at least one Lidar sensor and a docking station is provided with reflectors, and wherein the position of the docking station in the robot coordinate system is calculated based on Lidar data satisfying a predetermined brightness criterion. The docking station is further provided with a marker of a unique shape, and the robot comprises a camera sensor capable of recognizing the marker, wherein multiple Aruco marker sets of different sizes sharing a common center point are used for identification of the docking station. QUILEZ, R., Zeeman, A., Mitton, N., Vandaele, J.: Docking autonomous robots in passive docks with Infrared sensors and QR codes (In: Proc. EAI Int. Conf. Testbeds Res. Infrastructures Dev. Networks Communities (TRIDENTCOM), June 2015, Vancouver, Canada. doi: 10.4108/icst.tridentcom.2015.259673) relates to a method for autonomous docking of a mobile robot at a passive charging station, wherein the robot uses an on-board camera to detect QR codes placed above the dock for position estimation based on the relative size of the lateral edges of the visual pattern, and wherein infrared distance sensors are used to determine the distance to the dock and to perform different approaching strategies depending on the distance region.

### BRIEF DESCRIPTION OF THE DRAWINGS

Aspects of the present disclosure are best understood from the following detailed description when read with the accompanying figures:
FIG. 1 is a block diagram illustrating a top-down view of an autonomous vehicle docked within a docking location within a precise distance of forward and/or backward boundaries in accordance with various embodiments of the present disclosure.
FIG. 2 is a block diagram illustrating a top-down view of an example application of autonomous vehicle docking in accordance with various embodiments of the present disclosure.
FIG. 3 is a process flow diagram illustrating steps performed autonomously by the APM to incrementally adjust its position within a threshold distance in accordance with various embodiments of the present disclosure.
FIG. 4 is a process flow diagram illustrating steps performed by an external reference point detection module of APM in accordance with various embodiments of the present disclosure.
FIGs. 5A-5B show a process flow diagram illustrating control logic executed by a docking module for the autonomous incremental positioning performed by APM in accordance with various embodiments of the present disclosure.
FIG. 6 is a process flowchart illustrating a method of autonomously docking an autonomous vehicle such as APM in accordance with various embodiments of the present disclosure.
FIG. 7 illustrates an example system that processes input data and generates output data in accordance with various embodiments of the present disclosure.
FIG. 8 is a diagram illustrating a sample computing device architecture in accordance with various embodiments of the present disclosure.

### SUMMARY

In one aspect, a method for autonomously docking an autonomous vehicle includes receiving data having (i) an indication that the autonomous vehicle is within a docking location and (ii) an adjustment distance to place the autonomous vehicle within a threshold distance of the docking location. An external reference point detection module identifies an external reference point to the autonomous vehicle. A docking module incrementally adjusts a position of the autonomous vehicle in a first axis based on a distance between the autonomous vehicle and the external reference point until either (i) the autonomous vehicle is within the threshold distance of the docking location or (ii) a number of adjustments exceeds an adjustment maximum.

In some variations, the threshold distance is less than 5 centimeters of a boundary in the first axis of the docking location.

In other variations, the data further includes a plurality of light and detection ranging (LiDAR) data points.

In some variations, the external reference point is identified using the external reference point detection module by identifying a subset of the plurality of LiDAR data points located within a designated region. It is determined whether the subset is greater than a threshold value. Based on the subset being greater than the threshold value, a plurality of clusters are generated among the subset based on distances between each LiDAR data point. For each cluster of the plurality of clusters, a distance to an internal reference point on the autonomous vehicle is determined. A cluster of the plurality of clusters having a shortest distance in the first axis to the internal reference point is identified.

In other variations, the cluster is identified having the shortest distance in the first axis and a shortest distance to the internal reference point in a second axis.

In some variations, the external reference point has a light reflectivity that is of higher intensity than nearby surroundings of the external reference point.

In other variations, the position is incrementally adjusted through an iterative series of applying and releasing a braking mechanism of the autonomous vehicle.

In some variations, the position is incrementally adjusted by determining a brake release time. A braking mechanism is released for a portion of the brake release time. A total amount of time the braking mechanism has been released is evaluated. After the releasing and the evaluating, if the total amount of time is less than the portion of time, it is determined whether a distance the autonomous vehicle has moved is within the threshold distance. The distance is compared with an absolute value of a difference between the distance and the adjustment distance. The releasing, the evaluating, and the determining are repeated if the distance is not within the threshold distance.

In other variations, the position is further incrementally adjusted by applying the braking mechanism, if the total amount of time is not less than the portion of time, for another portion of the brake release time. The determining is repeated until (i) the distance is within the threshold distance or (ii) the number of incremental adjustments exceeds five adjustments.

In some variations, the autonomous vehicle is an autonomous prime mover and the data is received from an automatic rail mounted gantry.

In other variations, when the autonomous vehicle is within the threshold distance a container is automatically loaded or unloaded onto the autonomous vehicle without manual intervention.

In some variations, when the number of adjustments exceeds the adjustment maximum, an alarm is triggered to facilitate human-aided manual loading or unloading of a container onto the autonomous vehicle.

The details of one or more variations of the subject matter described herein are set forth in the accompanying drawings and the description below. Other features and advantages of the subject matter described herein will be apparent from the description and drawings, and from the examples.

### DETAILED DESCRIPTION

Autonomous vehicles operate with minimal to no human interaction. There are numerous ways autonomous vehicles are utilized in both personal and commercial settings. In a personal setting, for example, people can use autonomous vehicles to get from point A to point B such as driving to or from work or school. In a commercial setting, autonomous vehicles can be used to transport people or goods from point A to point B such as placing goods onto or retrieving goods off of stock shelves in retail spaces or storage warehouses or moving shipping containers around in a shipping port. Regardless of the personal or commercial use, autonomous vehicles will need to dock (or park) either temporarily or permanently in a particular location. Precise positional movements or adjustments during docking of autonomous vehicles is crucial so as to avoid any damage to any surroundings of the autonomous vehicle, the autonomous vehicle itself, or any goods or people the autonomous vehicle is transporting. The systems and methods described herein can be used for precision docking of autonomous vehicles within centimeters or less of specific docking locations.

The precision described herein may not be attainable by humans due to lack of visibility and positional feedback of human eyes. Additionally, there is inaccuracy involved in inching up the autonomous vehicle to a desired stop point. For example, if the autonomous vehicle initially arrives at a docking location and it is approximately 15 cm short of the final docking location, use of the braking mechanism alone using human control may not be sufficient for moving the autonomous vehicle into the precise location. This is because when a human releases the braking mechanism, the idle speed of the motor will pull the autonomous vehicle further, but the exact amount that the autonomous vehicle is pulled forward is indeterminate relative to the precision needed for proper placement of the autonomous vehicle. This can be due to, for example, braking mechanism delay, traction conditions, and/or engine idle speed.

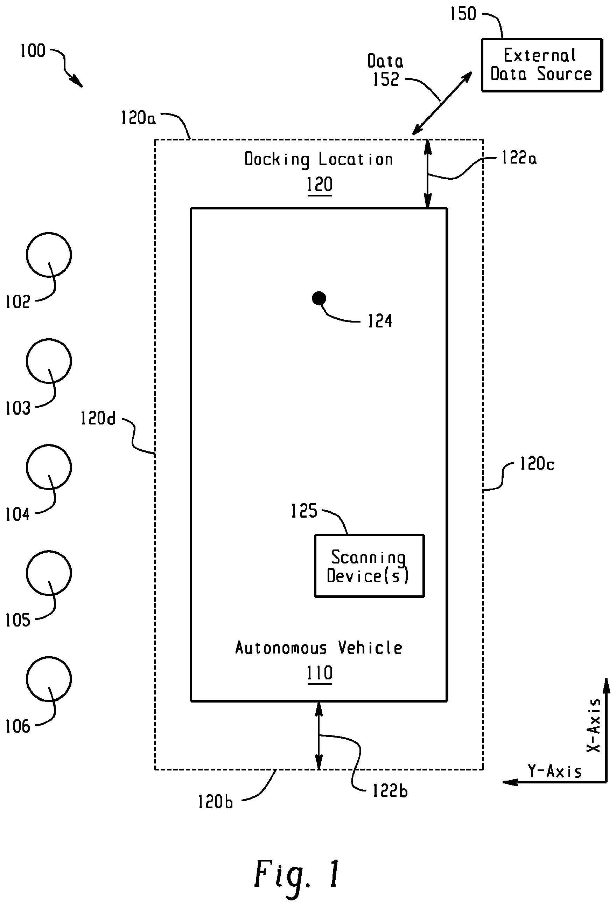

FIG. 1 is a block diagram 100 illustrating a top-down view of an autonomous vehicle 110 docked within a docking location 120 within a precise distance of forward and/or backward boundaries 120a, 120b in accordance with various embodiments of the present disclosure. Autonomous vehicle 110 navigates to the docking location 120 through various positional movements (e.g., left and/or right in the y-axis, laterally, forward and/or backward in the x-axis, longitudinally). Docking location 120 is defined by a forward boundary 120a and a backward boundary 120b in the x-axis and a right boundary 120c and a left boundary 120d in the y-axis. Once the autonomous vehicle 110 arrives within boundaries 120a-120d of the docking location 120, the autonomous vehicle 110 incrementally adjusts its position to be within a precise distance of forward and/or backward boundaries 120a, 120b. In other words, the position of the autonomous vehicle 110 is adjusted until it is within a threshold distance of the forward and/or backward boundaries 120a, 120b. The autonomous vehicle 110 makes these incremental adjustments by comparing a position of an internal reference point 124 with one or more positions of external reference points 102, 103, 104, 105, 106. The external reference points 102-106 are objects having a higher reflectivity potential than its surrounding such that light can be easily reflected off of it when scanned, for example, using light and detection ranging (LiDAR) scanning.

When autonomous vehicle 110 arrives within the boundaries 120a-120d of docking location 120, it can determine a distance 122a between the forward boundary 120a and a front edge of autonomous vehicle 110 and/or a distance 122b between the backward boundary 120b and a back edge of autonomous vehicle 110. The autonomous vehicle 110 utilizes distance 122a and/or distance 122b to determine whether it needs to move forward or backward in the x-axis to be within centimeters or less of a threshold distance. The distance 122a and/or distance 122b are provided to the autonomous vehicle 110 from an external data source (EDS) 150 via transmitted data 152. The external data source 15 determines a ground truth distance (e.g., distance 122a and/or distance 122b) autonomous vehicle 110 has to move in order to be within a threshold distance. The autonomous vehicle 110 continuously monitors how far it has traveled (e.g., distance 122a and/or distance 122b) by calculating a distance between the internal reference point 124 and one of the external reference points 102-106. This distance can be calculated using a series of scanning data points provided by a scanning device(s) 125 of the autonomous vehicle 110. Scanning device(s) 125 can be, for example, a LiDAR device. When the distance 122a and/or distance 122b is within centimeters or less of a threshold distance, the autonomous vehicle ceases its incremental adjustments. Autonomous vehicle 110 may include a localization system (not shown) that can be used to determine its position. The position determined by the localization system, however, may not be precise enough within centimeters or less of the threshold. Instead, the autonomous vehicle relies upon the distance between the internal reference point 124 and one of the external reference points 102-106.

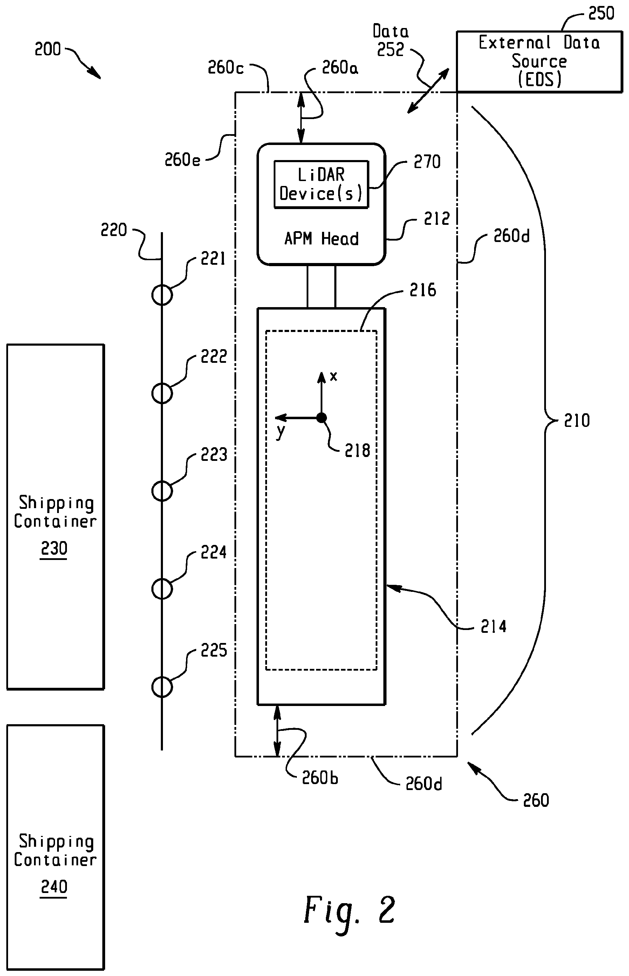

FIG. 2 is a block diagram 200 illustrating a top-down view of an example application of autonomous vehicle docking in accordance with various embodiments of the present disclosure. The example application of FIG. 2 is specific to the shipping industry. However, it can be appreciated by those of ordinary skill in the art that this is merely an example for illustrative purposes. In a shipping port such as a container transshipment hub, an example EDS 150 is an automatic rail mounted gantry and an example autonomous vehicle 110 is an autonomous platform mover (APM) such as an autonomous prime mover. In this example, the automatic rail mounted gantries and autonomous prime movers are used to move shipping containers, such as those carrying various goods, across different container yard blocks. Mounting and/or offloading containers onto the APMs is handled by the EDMs automatically. To enable this automatic process, APMs dock the containers at designated slots with an accuracy or precision (e.g., within a threshold distance) of centimeters or less (e.g., 0 to 5 cm).

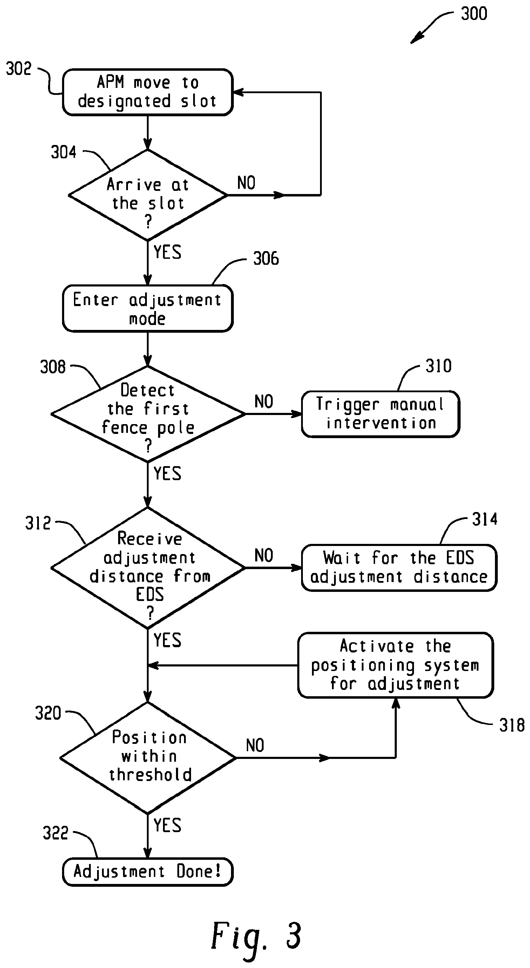

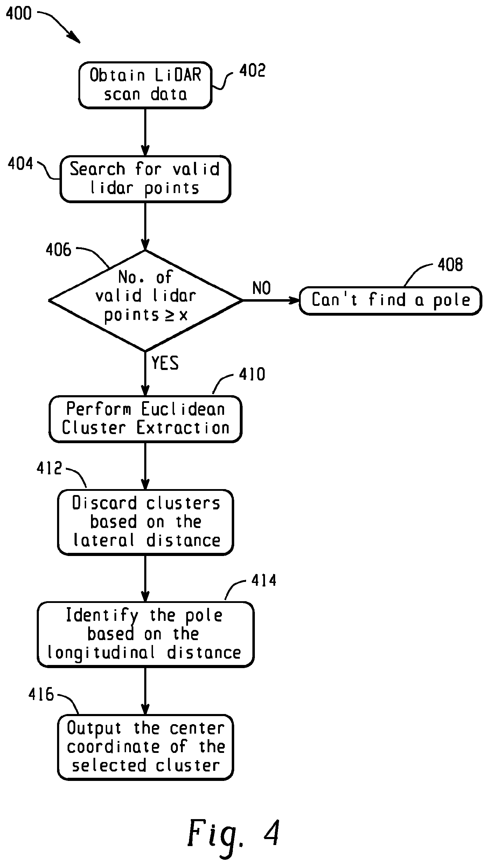

For example, in FIG. 2 an APM 210 includes a APM head 212 and a APM trailer 214. The APM head 212 can include one or more LiDAR devices 270. In some variations, one LiDAR device can perform scanning on the left side of the APM 210 and a second LiDAR device can perform scanning on the right side of the APM 210. The APM 210 docks in a docking location 260 along a fence line 220. The fence line 220 separates the APM 210 from a container yard having a number of shipping containers such as shipping container 230 and shipping container 240. The fence line 220 includes a number of fence poles 221, 222, 223, 224, 225 with spacing between each pole. Docking of the APM 210 within a precise distance (e.g., distance 260a, 260b) of the docking location 260 is critical to ensure safe onload and/or offload of shipping container 220 onto APM trailer 214. The APM 210 autonomously navigates itself to the docking location 260 (e.g., performs initial docking). This initial docking, however, is not precise within a threshold distance and the APM 210 needs further adjustment to ensure it is within a threshold distance (e.g., 0 to 5 cm) of the forward boundary 260c and/or backward boundary 260d of docking location 260. The APM 210 autonomously and incrementally adjusts its position as described in detail in FIGs. 3-5. More specifically, APM 210 communicates with EDS 250 to receive ground truth distance data 252 (e.g., distance 260b and distance 260c) to determine how far off from a threshold distance the APM 210 is. The APM uses ground truth distance data 252 to assist in its incremental adjustments. APM 210 utilizes an internal reference point 218 of the APM trailer 214 and determines a distance to one of the fence poles 221-225. This distance is determined using LiDAR data points provided by the LiDAR device(s) 270 of the APM 210, as described in more detail in FIG. 4. Once the APM 210 is docked by the EDS 250 and refines its adjustments within the docking location 260, shipping container 230 can be onloaded onto APM trailer 214 or offloaded from APM trailer 214 into container location 216 designated by dotted lines on the APM trailer 214.

FIG. 3 is a process flow diagram 300 illustrating steps performed autonomously by the APM 210 to incrementally adjust its position within a threshold distance in accordance with various embodiments of the present disclosure. For ease of understanding and illustration purposes only, FIG. 3 is discussed with reference to the shipping industry example continued from FIG. 2. However, it can be appreciated by those of ordinary skill in the art that such example can be applicable to any industry or scenario where an autonomous vehicle is docked in a docking location. The docking process initiates at step 302 when APM 210 arrives at the docking location 260. The APM 210 initially navigates itself to the docking location 260 autonomously. The APM 210 evaluates at step 304 whether it has arrived within the boundaries 260c, 260d, 260e, 260f of the docking location 260. If the APM 210 is within the boundaries 260c-260f of the docking location 260, then it enters an adjustment mode at step 306 to incrementally adjust its position to be within a threshold distance. Otherwise, step 302 repeats and the APM 210 continues to navigate itself to the docking location 260.

Once APM 210 enters its adjustment mode in step 306, the APM 210 attempts to detect or identify at least one external reference point, such as one of the fence poles 221-225 along fence line 220, at step 308. APM 210 uses an external reference point detection module to determine which external reference point (e.g., at least one of fence poles 221-225) is nearest to the internal reference point 218. A detailed description of the external reference point detection module functionality is described in FIG. 4. If APM 210 is unable to detect any external reference point such as one of the fence poles 221-225, then a manual intervention is triggered at step 310 to onload the shipping container 230 onto APM trailer 214 or offload the shipping container 230 from the APM trailer 214. If APM 210 is able to detect one of the external reference points such as one of the fence poles 221-225, a distance in the x-direction between the internal reference point 218 and one of the fence poles 221-225 is determined. This distance is an initial distance used for calculating a travel distance of APM 210. In addition to this distance, the EDS 250 provides a ground truth distance to the APM 210 via data 252. The ground truth distance is determined by the EDS 250 through continual laser scanning. The EDS 250 can include one or more three dimensional (3D) laser scanners (not shown in FIG. 2). The laser scanners can facilitate scanning of the APM 210 from various angles and calculate the ground truth distance between the APM 210 and the docking location 260. The APM 210 receives this ground truth distance from the EDS 250 and uses it as an initial distance to determine an adjustment distance that the APM 210 needs to move in order to achieve the threshold distance. APM 210 continuously monitors for the receipt of the adjustment distance from EDS 250 at step 312. While APM 210 awaits the adjustment distance from the EDS 250, it applies a braking mechanism at step 314. Once the APM 210 receives the adjustment distance from EDS 250, APM 210 incrementally adjusts its own position in steps 318 and 320 as described in detail in FIG. 4. Once the APM210 has traveled distance that is within the threshold distance, the adjustment is complete at step 322.

FIG. 4 is a process flow diagram 400 illustrating steps performed by an external reference point detection module of APM 210 in accordance with various embodiments of the present disclosure. For ease of understanding and illustration purposes only, FIG. 4 is discussed with reference to the shipping industry example continued from FIGs. 2-3. However, it can be appreciated by those of ordinary skill in the art that such example can be applicable to any industry or scenario where an autonomous vehicle is docked in a docking location.

**In** order to precisely dock autonomous vehicle 210 with a threshold distance of boundaries 260c-260d of docking location 260, an external reference point such as one of fence poles 221-225, is identified. Positions of the external reference points are determined using LiDAR scanning data using the LiDAR device(s) 270 at step 402. The LiDAR scanning data is made up of a number of individual LiDAR data points. These LiDAR data points are classified by the external reference point detection module based on intensity values. For example, any LiDAR data points having intensities higher than for example, 100, are classified as valid lidar points. This is because the fence poles 221-225 are highly reflective as compared to the fence line 220. To accelerate the filtering process, the external reference point detection module searches at step 404 for valid LiDAR data points in a designated region of a known external reference point position. The designated region can be an 3D area surrounding the known external reference point. In the context of the shipping industry example, the designated range of is defined as approximately -1.0m < x < 2.4m 1.8m < y < 2.8m, 0.0m < z < 0.45m, and 1.1m < z < 1.6m for fence poles on the left side of APM 210. For fence poles on the right side of APM 210, the designated range is defined as -1.0m < x < 2.4m, -2.8m < y < -1.8m, 0.0m < z <0.45m, and 1.1m < z < 1.6m for fence poles on the right side of APM 210. The external reference point detection module scans the collected LiDAR data points at step 404 for a subset of data points within these designated ranges. To determine whether a pole is detected, the number of data points in the subset is compared to a threshold data point value at step 402. This threshold data point value is set based on the selected external reference point. For example, in the context of the shipping industry example in FIG. 2, the number of LiDAR data points in the designated region is greater than 70 in order for effective fence pole detection. If the number of valid LiDAR data points is less than or equal to the threshold data point value, then it is determined by the external reference point detection module that a pole cannot be found at step 408 and the external reference point detection module generates output data indicating same.

If the number of valid LiDAR data points is greater than the threshold data point value, the external reference point detection module clusters the subset of LiDAR data points based on the Euclidean distance between each LiDAR data point in the subset. The Euclidean distance in a three-dimensional space is defined as: $d \left(p, q\right) = \sqrt{{\left({q}_{1}-{p}_{1}\right)}^{2} + {\left({q}_{2}-{p}_{2}\right)}^{2} + \left({q}_{3}-{p}_{3}\right)}$ (1) where *p* and *q* each represent a different LiDAR data point in the subset having coordinates (*p₁, p₂, p₃*) and (*q₁, q₂, q₃*), respectively. Clusters are formed using a Euclidean distance threshold. A LiDAR data point is added to an existing cluster if the minimum Euclidean distance between the LiDAR data point and other LiDAR data points within the existing cluster is less than the Euclidean distance threshold. Otherwise, a new cluster is formed with that LiDAR data point.

Once the clusters are formed, the external reference point detection module loops through each of the clusters to determine a distance in the y-axis between the cluster and the internal reference point 218. After looping through all the clusters, the external reference point detection module identifies one cluster having the smallest lateral distance in the y-axis to the internal reference point 218 on the APM 210. Equation (1) is used to determine this distance using a center of the cluster as one coordinate and the internal reference point 218 as the other coordinate. The center of the cluster can be an average value of the data points within that cluster. The other clusters (e.g., the remaining clusters that do not have the smallest lateral distance) are discarded at step 412. In other words, the clusters having a lateral distance that is larger than the smallest lateral distance are discarded. This discarding avoids misclassification of other surrounding objects as external reference points, such as the EDS 250. It is possible to detect multiple external reference points should a small distance gap be present between the external reference points. For example, turning back to FIG. 2, a gap of approximately 0.6m for some shipping containers such as those requiring refrigeration. To differentiate these external reference points from others, the external reference point detection module identifies the external reference points having the shortest longitudinal distance to the internal reference point 218 as the external reference point for adjustments. The external reference point detection module outputs a position of the external reference point at step 416 based on a calculated average of the LiDAR data points within the selected cluster.

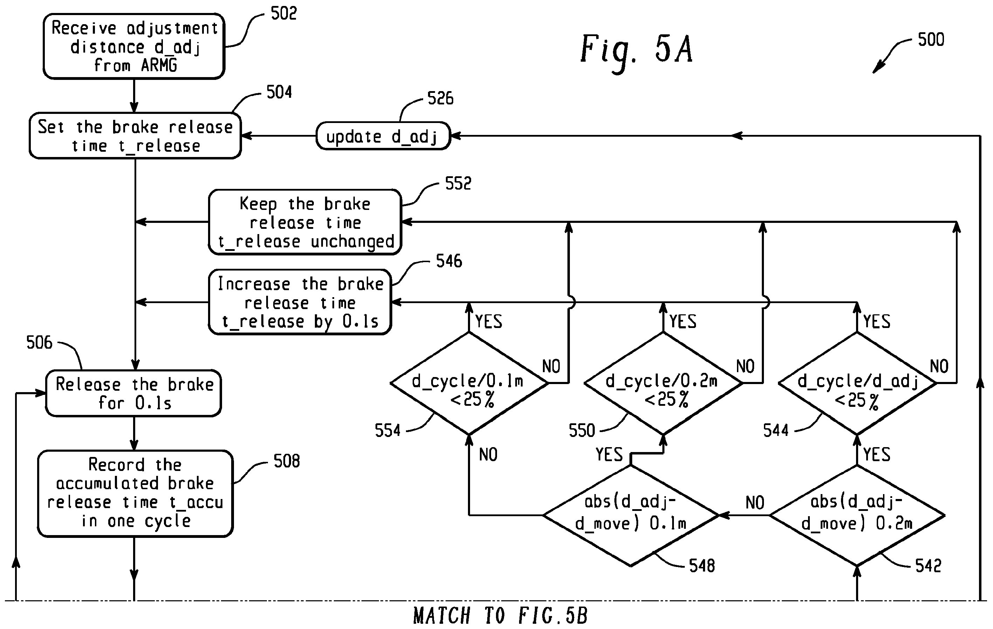

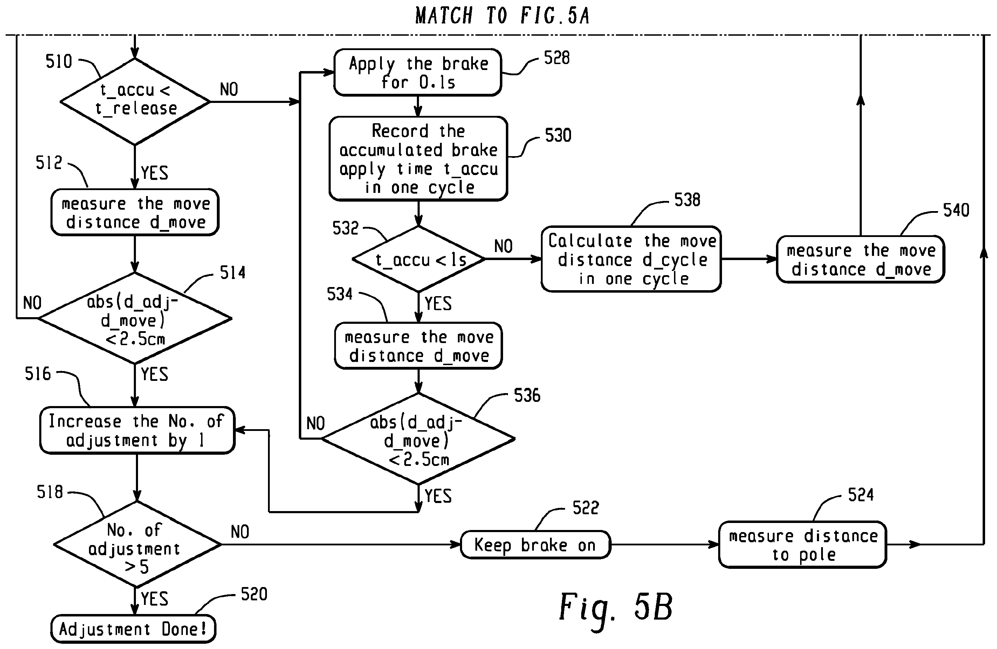

FIGs. 5A-5B show a process flow diagram 500 illustrating control logic executed by a docking module for the autonomous incremental positioning performed by APM 210 in accordance with various embodiments of the present disclosure. For ease of understanding and illustration purposes only, FIG. 5 is discussed with reference to the shipping industry example continued from FIGs. 2-4. However, it can be appreciated by those of ordinary skill in the art that such example can be applicable to any industry or scenario where an autonomous vehicle is docked in a docking location. Docking of the APM 210 within a precise accuracy of a few centimeters or less (e.g., 0-5cm) can be challenging given the APM 210 has a length in the tens of meters (e.g., 10-20m). Additionally, because the APM 210 is so large, there can be a brake delay. In order to account for brake delays, speeds of the APM 210 are kept as low as possible when making the incremental position adjustments. For example, a throttle percentage of the APM 210 is set to be approximately 1% throughout the incremental adjustments. To make incremental positional adjustments, the APM 210 applies its brakes for a certain period of time (e.g., 0-5 seconds) and then releases a braking mechanism for another amount of time (e.g., 0-5 seconds). This sequential braking and releasing process is repeated for many cycles to incrementally adjust the position of the APM 210 until the APM 210 is within the threshold distance. The braking mechanism is applied at approximately 40% to facilitate stopping of the APM 210. It is the modulation of the brake release time that controls the incremental distance the APM 210 moves per actuation cycle. The longer the brake release time is, the larger the distance the APM 210 moves in one cycle.

As previously discussed in FIG. 3, APM 210 continuously monitors for the receipt of the adjustment distance from EDS 250 at step 312. The control logic for making incremental adjustments initiates at step 502 when the adjustment distance (e.g., d_adj) is received from the EDS 250. Once the adjustment distance is received from the EDS 250, APM 210 sets an initial brake release time (e.g., t_release of 0-5 seconds) based on the adjustment distance at step 504. The initial brake release time can be obtained through a large amount of experimental data. For example, when the adjustment distance is greater than approximately 0.2m, the initial brake release time is set to be approximately 1s. If the adjustment distance lies in between approximately 0.1m and approximately 0.2m, the initial brake release time is set to be 0.6s. The brake release time is further reduced to be approximately 0.4s when the adjustment distance is less than approximately 0.1m.

After setting the initial brake release time, the docking module is triggered at a frequency of approximately 10Hz. The braking mechanism is released for a portion of the initial brake release time at step 506. The docking module records an accumulated brake release time (e.g., t_accu - duration of time the braking mechanism has been released cumulatively) at step 508. This accumulated brake release time (e.g., t_accu) is compared with the initial brake release time (e.g., t_release) at step 510. If the accumulated brake release time is less than the initial brake release time (e.g., t_accu < t_release), then the distance between the internal reference point 218 and the external reference point (e.g., one of the fence poles 221-225) is measured to compute a traveled distance (e.g., d_move) of the APM 210 at step 512. The docking module evaluates the difference between an absolute value of the traveled distance (e.g., d_move) and the adjustment distance (e.g., d_adj) compared with approximately half of the threshold distance at step 514. The threshold accuracy is less than the threshold distance to compensate for any measurement errors from the scanning performed by the EDS 250. If this absolute value is not less than approximately half of the threshold distance, then steps 506-514 are repeated. Alternatively, if the absolute value is less than or equal to approximately half of the threshold distance, then a count of the number of adjustments is incremented by one at step 516. The count is compared to a value of 5 at step 518. If the count is greater than 5, then the adjustment cycle is terminated at step 520. Alternatively, if the count is not greater than or equal to 5 the braking mechanism of the APM 210 are kept on (e.g., still applied) at step 522. A distance between the internal reference point 218 and the external reference point is calculated at step 524. Using this distance, the adjustment distance is modified at step 526 and the adjustment process resumes for another cycle at step 504.

Returning back to step 510, if the accumulated brake release time is not less than the initial brake release time (e.g., t_accu < t_release), then the braking mechanism is applied for a small time increment (e.g., 0.1s) at step 528. The docking module records an accumulated brake apply time (e.g., t_accu - duration of time the braking mechanism has been applied cumulatively) at step 530. The accumulated brake apply time is compared with a short time duration (e.g., 1s) at step 532. If the accumulated brake apply time is less than the short time duration then the distance between the internal reference point 218 and the external reference point (e.g., one of the fence poles 221-225) is measured to compute a traveled distance (e.g, d_move) of the APM 210 at step 534. The docking module then evaluates the difference between an absolute value of the traveled distance (e.g., d_move) and the adjustment distance (e.g., d_adj) compared with approximately half of the threshold distance at step 536. If this absolute value is less than half of the threshold distance, then the docking module proceeds to step 516. Alternatively, if this absolute value is not less than half of the threshold distance, then the docking module repeats steps 528-532.

Returning back to step 532, if the accumulated time not less than the short time duration or is equal to the short time duration, a total traveled distance (e.g., d_cycle) in one actuation cycle is calculated at step 538 to benchmark with the adjustment distance or threshold distance. The docking module determines the distance between the internal reference point 218 and the external reference point (e.g., one of the fence poles 221-225) is measured to compute a traveled distance (e.g, d_move) of the APM 210 at step 540. The docking modules compares a portion of the adjustment distance threshold (e.g., 0.2m) with the absolute value of the difference between the adjustment distance and the traveled distance. If the absolute value is greater than the portion of the adjustment distance threshold (e.g., 0.2m), then the quotient of the total traveled distance in one actuation cycle (e.g., d_cycle) and the adjustment distance (e.g., d_adj) is compared with a percentage value (e.g., 25% or 0.25) at step 544. A ratio below the percentage value indicates the traveled distance in one actuation cycle is too small. In other words, if the quotient is less than the percentage value, the docking module increases the brake release time by small time duration (e.g., 0.1s) at step 546 for the next actuation cycle, which resumes at step 506. Alternatively, returning to step 544, if the quotient is not less than the percentage value, then the brake release time (or initial brake release time) remains unchanged at step 552 and the docking module resumes at step 506.

Returning to step 542, if the absolute value is less than or equal to the portion of the adjustment distance threshold (e.g., 0.2m), then the absolute value is compared with an even smaller portion of the adjustment distance threshold (e.g., 0.1m) at step 548. If the absolute value is greater than or equal to the even smaller adjustment distance threshold, then a quotient of the total traveled distance in one actuation cycle (e.g., d_cycle) and the portion of the adjustment distance (e.g., 0.2m) is compared with the percentage value (e.g., 25%) at step 552. If the quotient is less than the percentage value, the docking module increases the brake release time by small time duration (e.g., 0.1s) at step 546 for the next actuation cycle, which resumes at step 506. Alternatively, if the quotient is not less than or is equal to the percentage value, then the brake release time (or initial brake release time) remains unchanged at step 552 and the docking module resumes at step 506.

Returning to step 548, if the quotient is not greater than the smaller portion of the adjustment distance threshold (e.g., 0.1m), then another quotient of the total distance traveled in one actuation cycle (e.g., d_cycle) and the smaller portion of the adjustment distance (e.g., 0.1m) is compared with the percentage value at step 554. If that quotient is less than or equal to the percentage value, then the docking module increases the brake release time by small time duration (e.g., 0.1s) at step 546 for the next actuation cycle, which resumes at step 506. Alternatively, if the quotient is not less than or is equal to the percentage value, then the brake release time (or initial brake release time) remains unchanged at step 552 and the docking module resumes at step 506.

Despite the foregoing, the adjustment cycles described in FIG. 5 could be terminated in any actuation step once the APM 210 is within the threshold distance of the docking location. However, to account for any delays in the braking mechanism, it is possible that the actual docking position error is greater than the threshold distance. To accommodate for this, the whole adjustment cycle can be repeated until the final docking position error is less than threshold distance or the number of adjustment cycles is larger than 5.

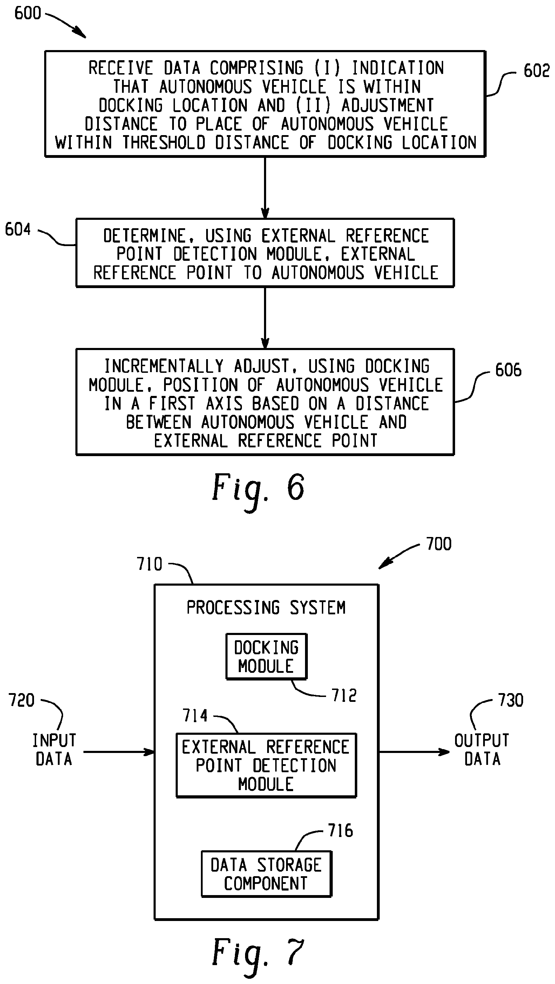

FIG. 6 is a process flowchart 600 illustrating a method of autonomously docking an autonomous vehicle such as APM 210 in accordance with various embodiments of the present disclosure. At step 602, data 252 is received that includes (i) an indication that the autonomous vehicle (e.g., APM 210) is within a docking location 260 and (ii) an adjustment distance (e.g., d_adju) to place the autonomous vehicle within a threshold distance of the docking location 260. Using an external reference point detection module, an external reference point such as one of fence poles 221-225 to the autonomous vehicle are determined at step 604 using the various steps described in FIG. 4. Using a docking module, a position of the autonomous vehicle is incrementally adjusted at step 606 in a first axis based on a distance between the autonomous vehicle and the external reference point as described in detail in FIG. 5.

FIG. 7 illustrates an example system 700 that processes input data 720 and generates output data 730 in accordance with various embodiments of the present disclosure. The input data can be, for example, data 252 received from EDS 250. This data can include any of LiDAR data points from LiDAR scanning, an adjustment distance (e.g., d_adj), or an indication that the autonomous vehicle such as APM 210 is within docking location 260.

The system 700 includes one or more processing systems 710. Processing system 1610 includes a docking module 712, an external reference point detection module 714, and data storage 716. The input data 720 may be received by the processing system 710 via a communications network, e.g., an Internet, an intranet, an extranet, a local area network ("LAN"), a wide area network ("WAN"), a metropolitan area network ("MAN"), a virtual local area network ("VLAN"), and/or any other network. The input data 720 may also be received via a wireless, a wired, and/or any other type of connection. The input data 720 is processed by the docking module 712 and/or the external reference point detection module 714 utilizing the algorithms described in detail in FIGs. 4-5.

Processing system 710 may be implemented using software, hardware and/or any combination of both. Processing system 710 may also be implemented in a personal computer, a laptop, a server, a mobile telephone, a smartphone, a tablet, cloud, and/or any other type of device and/or any combination of devices. The docking module 712 and/or the external reference point detection module 714 may perform execution, compilation, and/or any other functions on the input data 720 as discussed in detail in FIGs. 4-5.

The data storage component 716 may be used for storage of data processed by processing system 710 and may include any type of memory (e.g., a temporary memory, a permanent memory, and/or the like).

Output data 730 can include any data generated by the docking module 712 or the external reference point detection module 714 such as an indication that an external reference point cannot be found, command data to the braking mechanism to enable or disable braking functionality, and the like. Output data 730 can also include any data stored within data storage component 716.

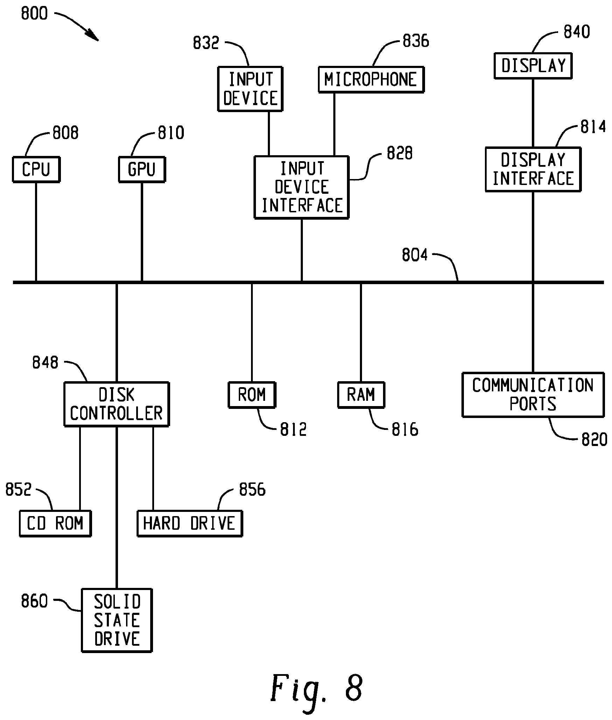

FIG. 8 is a diagram 800 illustrating a sample computing device architecture for implementing various aspects described herein in which certain components can be omitted depending on the application. A bus 804 can serve as the information highway interconnecting the other illustrated components of the hardware. A processing system 808 labeled CPU (central processing unit) (e.g., one or more computer processors / data processors at a given computer or at multiple computers) and/or a GPU-based processing system 810 can perform calculations and logic operations required to execute a program. A non-transitory processor-readable storage medium, such as read only memory (ROM) 812 and random access memory (RAM) 816, can be in communication with the processing system 808 and can include one or more programming instructions for the operations specified here. Optionally, program instructions can be stored on a non-transitory computer-readable storage medium such as a magnetic disk, optical disk, recordable memory device, flash memory, or other physical storage medium.

**In** one example, a disk controller 848 can interface with one or more optional disk drives to the system bus 804. These disk drives can be external or internal floppy disk drives such as 860, external or internal CD-ROM, CD-R, CD-RW or DVD, or solid state drives such as 852, or external or internal hard drives 856. As indicated previously, these various disk drives 852, 856, 860 and disk controllers are optional devices. The system bus 804 can also include at least one communication port 820 to allow for communication with external devices either physically connected to the computing system or available externally through a wired or wireless network. In some cases, the at least one communication port 820 includes or otherwise comprises a network interface.

To provide for interaction with a user, the subject matter described herein can be implemented on a computing device having a display device 840 (e.g., a CRT (cathode ray tube) or LCD (liquid crystal display) monitor) for displaying information obtained from the bus 804 via a display interface 814 to the user and an input device 832 such as keyboard and/or a pointing device (e.g., a mouse or a trackball) and/or a touchscreen by which the user can provide input to the computer. Other kinds of input devices 832 can be used to provide for interaction with a user as well; for example, feedback provided to the user can be any form of sensory feedback (e.g., visual feedback, auditory feedback by way of a microphone 836, or tactile feedback); and input from the user can be received in any form, including acoustic, speech, or tactile input. The input device 832 and the microphone 836 can be coupled to and convey information via the bus 804 by way of an input device interface 828. Other computing devices, such as dedicated servers, can omit one or more of the display 840 and display interface 814, the input device 832, the microphone 836, and input device interface 828.

One or more aspects or features of the subject matter described herein can be realized in digital electronic circuitry, integrated circuitry, specially designed application specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural language, an object-oriented programming language, a functional programming language, a logical programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example as would a processor cache or other random access memory associated with one or more physical processor cores.

In the descriptions above and in the examples, phrases such as "at least one of" or "one or more of" may occur followed by a conjunctive list of elements or features. The term "and/or" may also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." In addition, use of the term "based on," above and in the examples is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. A method for autonomously docking an autonomous vehicle (110), the method comprising:
receiving (600) data comprising (i) an indication that the autonomous vehicle (110) is within boundaries of a docking location and (ii) an adjustment distance to place the autonomous vehicle (110) within a threshold distance of boundaries of the docking location;
identifying (604), using an external reference point detection module, an external reference point to the autonomous vehicle (110); and
incrementally adjusting (606), using a docking module, a position of the autonomous vehicle (110) in a first axis based on a distance between the autonomous vehicle (110) and the external reference point until either (i) the autonomous vehicle (110) is within the threshold distance of boundaries of the docking location or (ii) a number of adjustments exceeds an adjustment maximum.

2. The method of claim 1, wherein
(i) the threshold distance is less than 5 centimeters of a boundary in the first axis of the docking location, and/or
(ii) the data further comprises a plurality of light and detection ranging (LiDAR) data points, wherein optionally the external reference point is identified using the external reference point detection module by: identifying a subset of the plurality of LiDAR data points by the external reference point detection module located within a designated region; determining whether the subset is greater than a threshold value; based on the subset being greater than the threshold value, generating a plurality of clusters among the subset based on Euclidean distances between each LiDAR data point; for each cluster of the plurality of clusters, determining a lateral distance between the cluster and an internal reference point (218) on the autonomous vehicle (110); and identifying a cluster of the plurality of clusters having a shortest distance in the first axis to the internal reference point (218), wherein optionally the cluster is identified having the shortest distance in the first axis and a shortest distance to the internal reference point (218) in a second axis.

3. The method of any of the preceding claims, wherein the external reference point has a light reflectivity that is of higher intensity than nearby surroundings of the external reference point.

4. The method of any of the preceding claims, the position is incrementally adjusted through an iterative series of applying and releasing a braking mechanism of the autonomous vehicle (110).

5. The method of any of the preceding claims, wherein the position is incrementally adjusted by:
determining a brake release time; releasing a braking mechanism for a portion of the brake release time;
evaluating a total amount of time the braking mechanism has been released;
determining, after the releasing and the evaluating, if the total amount of time is less than the portion of time, whether a distance the autonomous vehicle (110) has moved is within the threshold distance, wherein the distance is compared with an absolute value of a difference between the distance and the adjustment distance; and
repeating the releasing, the evaluating, and the determining if the distance is not within the threshold distance, wherein optionally the position is further incrementally adjusted by:
applying the braking mechanism, if the total amount of time is not less than the portion of time, for another portion of the brake release time; and
repeating the determining until (i) the distance is within the threshold distance or (ii) the number of incremental adjustments exceeds five adjustments.

6. The method of any of the preceding claims, wherein the autonomous vehicle (110) is an autonomous prime mover and the data is received from an automatic rail mounted gantry.

7. The method of any of the preceding claims, wherein when the autonomous vehicle (110) is within the threshold distance a container is automatically loaded or unloaded onto the autonomous vehicle (110) without manual intervention.

8. The method of any of the preceding claims, wherein when the number of adjustments exceeds the adjustment maximum, an alarm is triggered to facilitate human-aided manual loading or unloading of a container onto the autonomous vehicle (110).

9. A system comprising:
at least one data processor; and
memory storing instructions, which when executed by at least one data processor, result in operations for implementing operations comprising:
receiving (600) data comprising (i) an indication that the autonomous vehicle (110) is within boundaries of a docking location and (ii) an adjustment distance to place the autonomous vehicle (110) within a threshold distance of boundaries of the docking location;
identifying (604), using an external reference point detection module, an external reference point to the autonomous vehicle (110); and
incrementally adjusting (606), using a docking module, a position of the autonomous vehicle (110) in a first axis based on a distance between the autonomous vehicle (110) and the external reference point until either (i) the autonomous vehicle (110) is within the threshold distance of boundaries of the docking location or (ii) a number of adjustments exceeds an adjustment maximum.

10. The system of claim 9, wherein
(a) the threshold distance is less than 5 centimeters of a boundary in the first axis of the docking location, and/or
(b) the data further comprises a plurality of light and detection ranging (LiDAR) data points and wherein the external reference point is identified using the external reference point detection module by:
identifying a subset of the plurality of LiDAR data points by the external reference point detection module located within a designated region;
determining whether the subset is greater than a threshold value;
based on the subset being greater than the threshold value, generating a plurality of clusters among the subset based on Euclidean distances between each LiDAR data point;
for each cluster of the plurality of clusters, determining a lateral distance between the cluster and an internal reference point (218) on the autonomous vehicle (110); and
identifying a cluster of the plurality of clusters having a shortest distance in the first axis to the internal reference point (218), wherein the cluster is identified having the shortest distance in the first axis and a shortest distance to the internal reference point (218) in a second axis.

11. The system of any of claim 9 to claim 10, wherein the external reference point has a light reflectivity that is of higher intensity than nearby surroundings of the external reference point.

12. The system of any of claim 9 to claim 11, the position is incrementally adjusted through an iterative series of applying and releasing a braking mechanism of the autonomous vehicle (110) by:
determining a brake release time; releasing a braking mechanism for a portion of the brake release time;
evaluating a total amount of time the braking mechanism has been released;
determining, after the releasing and the evaluating, if the total amount of time is less than the portion of time, whether a distance the autonomous vehicle (110) has moved is within the threshold distance, wherein the distance is compared with an absolute value of a difference between the distance and the adjustment distance;
repeating the releasing, the evaluating, and the determining if the distance is not within the threshold distance; applying the braking mechanism, if the total amount of time is not less than the portion of time, for another portion of the brake release time; and
repeating the determining until (i) the distance is within the threshold distance or (ii) the number of incremental adjustments exceeds five adjustments.

13. The system of any of claim 9 to claim 12, wherein
(i) the autonomous vehicle (110) is an autonomous prime mover and the data is received from an automatic rail mounted gantry, and/or
(ii) when the autonomous vehicle (110) is within the threshold distance a container is automatically loaded or unloaded onto the autonomous vehicle (110) without manual intervention and wherein when the number of adjustments exceeds the adjustment maximum, an alarm is triggered to facilitate human-aided manual loading or unloading of a container onto the autonomous vehicle (110).

14. A non-transitory computer program product storing instructions which, when executed by at least one data processor forming part of at least one computing device, implement operations comprising:
receiving data comprising (i) an indication that the autonomous vehicle (110) is within boundaries of a docking location and (ii) an adjustment distance to place the autonomous vehicle (110) within a threshold distance of boundaries of the docking location;
identifying, using an external reference point detection module, an external reference point to the autonomous vehicle (110); and
incrementally adjusting, using a docking module, a position of the autonomous vehicle (110) in a first axis based on a distance between the autonomous vehicle (110) and the external reference point until either (i) the autonomous vehicle (110) is within the threshold distance of boundaries of the docking location or (ii) a number of adjustments exceeds an adjustment maximum.

15. The non-transitory computer program product of claim 14, wherein the operations further comprise a method as in any of claim 1 to claim 8.

## Patentansprüche

1. Verfahren zum autonomen Andocken eines autonomen Fahrzeugs (110), wobei das Verfahren umfasst:
Empfangen von Daten (600), die (i) eine Angabe, dass sich das autonome Fahrzeug (110) innerhalb von Grenzen einer Andockposition befindet, und (ii) eine Anpassungsdistanz zum Platzieren des autonomen Fahrzeugs (110) innerhalb einer Schwellendistanz von Grenzen der Andockposition, umfassen;
Identifizieren (604), unter Verwendung eines Moduls zur Erkennung eines externen Referenzpunkts, eines externen Referenzpunkts zu dem autonomen Fahrzeug (110); und
inkrementelles Anpassen (606), unter Verwendung eines Andockmoduls, einer Position des autonomen Fahrzeugs (110) in einer ersten Achse auf Grundlage einer Distanz zwischen dem autonomen Fahrzeug (110) und dem externen Referenzpunkt, bis entweder (i) sich das autonome Fahrzeug (110) innerhalb der Schwellendistanz von Grenzen der Andockposition befindet, oder (ii) eine Anzahl von Anpassungen ein Anpassungsmaximum überschreitet.

2. Verfahren nach Anspruch 1, wobei
(i) die Schwellendistanz weniger als 5 Zentimeter einer Grenze in der ersten Achse der Andockposition beträgt, und/oder
(ii) die Daten ferner eine Mehrzahl von Datenpunkten für lichtgestützte Erkennung und Abstandsmessung (LiDAR) umfassen, wobei der externe Referenzpunkt optional unter Verwendung des Moduls zur Erkennung eines externen Referenzpunkts identifiziert wird durch: Identifizieren einer Untergruppe der Mehrzahl von LiDAR-Datenpunkten durch das innerhalb eines ausgewiesenen Bereichs befindliche Modul zur Erkennung eines externen Referenzpunkts; Bestimmen, ob die Untergruppe größer als ein Schwellenwert ist; basierend darauf, dass die Untergruppe größer als ein Schwellenwert ist, Erzeugen einer Mehrzahl von Clustern innerhalb der Untergruppe auf Grundlage Euklidischer Distanzen zwischen den einzelnen LiDAR-Datenpunkten; für jeden Cluster von der Mehrzahl von Clustern Bestimmen einer seitlichen Distanz zwischen dem Cluster und einem internen Referenzpunkt (218) an dem autonomen Fahrzeug (110); und Identifizieren eines Clusters von der Mehrzahl von Clustern mit einer kürzesten Distanz in der ersten Achse zu dem internen Referenzpunkt (218), wobei optional der Cluster mit der kürzesten Distanz in der ersten Achse und einer kürzesten Distanz zu dem internen Referenzpunkt (218) in einer zweiten Achse identifiziert wird.

3. Verfahren nach einem der vorhergehenden Ansprüche, wobei der externe Referenzpunkt ein Lichtreflexionsvermögen aufweist, das von einer höheren Intensität als nahe Umgebungen des externen Referenzpunkts ist.

4. Verfahren nach einem der vorhergehenden Ansprüche, wobei die Position inkrementell durch eine iterative Abfolge von Anwenden und Lösen eines Bremsmechanismus des autonomen Fahrzeugs (110) angepasst wird.

5. Verfahren nach einem der vorhergehenden Ansprüche, wobei die Position inkrementell angepasst wird durch:
Bestimmen einer Bremslösezeit; Lösen eines Bremsmechanismus für einen Abschnitt der Bremslösezeit;
Evaluieren einer Gesamtzeitdauer, in der der Bremsmechanismus gelöst war;
Bestimmen, nach dem Lösen und dem Evaluieren, wenn die Gesamtzeitdauer geringer als der Zeitabschnitt ist, ob eine Distanz, über die sich das autonome Fahrzeug (110) bewegt hat, innerhalb der Schwellendistanz liegt, wobei die Distanz mit einem Absolutwert einer Differenz zwischen der Distanz und der Anpassungsdistanz verglichen wird; und
Wiederholen des Lösens, des Evaluierens und des Bestimmens, ob die Distanz nicht innerhalb der Schwellendistanz liegt, wobei die Position ferner inkrementell angepasst wird durch:
Anwenden des Bremsmechanismus, wenn die Gesamtzeitdauer nicht geringer als der Zeitabschnitt ist, für einen anderen Abschnitt der Bremslösezeit; und
Wiederholen des Bestimmens, bis (i) die Distanz innerhalb der Schwellendistanz liegt, oder (ii) die Anzahl inkrementeller Anpassungen fünf Anpassungen überschreitet.

6. Verfahren nach einem der vorhergehenden Ansprüche, wobei das autonome Fahrzeug (110) eine autonome Sattelzugmaschine ist und die Daten von einem automatischen, schienenmontierten Portal empfangen werden.

7. Verfahren nach einem der vorhergehenden Ansprüche, wobei dann, wenn sich das autonome Fahrzeug (110) innerhalb der Schwellendistanz befindet, ein Container automatisch ohne manuelle Intervention auf dem autonomen Fahrzeug (110) verladen oder von ihm entladen wird.

8. Verfahren nach einem der vorhergehenden Ansprüche, wobei dann, wenn die Anzahl von Anpassungen das Anpassungsmaximum überschreitet, ein Alarm ausgelöst wird, um menschlich unterstütztes manuelles Laden oder Entladen eines Containers auf bzw. von dem autonomen Fahrzeug (110) zu erleichtern.

9. System, umfassend:
mindestens einen Datenprozessor; und
einen Speicher, der Anweisungen speichert, die, wenn sie von dem mindestens einen Datenprozessor ausgeführt werden, in Operationen zum Implementieren von Operationen resultieren, die umfassen:
Empfangen von Daten (600), die (i) eine Angabe, dass sich das autonome Fahrzeug (110) innerhalb von Grenzen einer Andockposition befindet, und (ii) eine Anpassungsdistanz zum Platzieren des autonomen Fahrzeugs (110) innerhalb einer Schwellendistanz von Grenzen der Andockposition, umfassen;
Identifizieren (604), unter Verwendung eines Moduls zur Erkennung eines externen Referenzpunkts, eines externen Referenzpunkts zu dem autonomen Fahrzeug (110); und
inkrementelles Anpassen (606), unter Verwendung eines Andockmoduls, einer Position des autonomen Fahrzeugs (110) in einer ersten Achse auf Grundlage einer Distanz zwischen dem autonomen Fahrzeug (110) und dem externen Referenzpunkt, bis entweder (i) sich das autonome Fahrzeug (110) innerhalb der Schwellendistanz von Grenzen der Andockposition befindet, oder (ii) eine Anzahl von Anpassungen ein Anpassungsmaximum überschreitet.

10. System nach Anspruch 9, wobei
(a) die Schwellendistanz weniger als 5 Zentimeter einer Grenze in der ersten Achse der Andockposition beträgt, und/oder
(b) die Daten ferner eine Mehrzahl von Datenpunkten für lichtgestützte Erkennung und Abstandsmessung (LiDAR) umfassen, und wobei der externe Referenzpunkt unter Verwendung des Moduls zur Erkennung des externen Referenzpunkts identifiziert wird durch:
Identifizieren einer Untergruppe der Mehrzahl von LiDAR-Datenpunkten durch das innerhalb eines ausgewiesenen Bereichs befindliche Modul zur Erkennung eines externen Referenzpunkts;
Bestimmen, ob die Untergruppe größer als ein Schwellenwert ist;
basierend darauf, dass die Untergruppe größer als der Schwellenwert ist, Erzeugen einer Mehrzahl von Clustern innerhalb der Untergruppe auf Grundlage Euklidischer Distanzen zwischen den einzelnen LiDAR-Datenpunkten;
für jeden Cluster von der Mehrzahl von Clustern Bestimmen einer seitlichen Distanz zwischen dem Cluster und einem internen Referenzpunkt (218) an dem autonomen Fahrzeug (110); und
Identifizieren eines Clusters von der Mehrzahl von Clustern mit einer kürzesten Distanz in der ersten Achse zu dem internen Referenzpunkt (218), wobei der Cluster mit der kürzesten Distanz in der ersten Achse und einer kürzesten Distanz zu dem internen Referenzpunkt (218) in einer zweiten Achse identifiziert wird.

11. System nach einem von Anspruch 9 bis Anspruch 10, wobei der externe Referenzpunkt ein Lichtreflexionsvermögen aufweist, das von einer höheren Intensität als nahe Umgebungen des externen Referenzpunkts ist.

12. System nach einem von Anspruch 9 bis Anspruch 11, wobei die Position inkrementell durch eine iterative Serie von Anwenden und Lösen eines Bremsmechanismus des autonomen Fahrzeugs (110) angepasst wird.
Bestimmen einer Bremslösezeit; Lösen eines Bremsmechanismus für einen Abschnitt der Bremslösezeit;
Evaluieren einer Gesamtzeitdauer, in der der Bremsmechanismus gelöst war;
Bestimmen, nach dem Lösen und Evaluieren, ob die Gesamtzeitdauer geringer als der Zeitabschnitt ist, ob eine Distanz, über die sich das autonome Fahrzeug (110) bewegt hat, innerhalb der Schwellendistanz liegt, wobei die Distanz mit einem Absolutwert einer Differenz zwischen der Distanz und der Anpassungsdistanz verglichen wird;
Wiederholen des Lösens, des Evaluierens und des Bestimmens, ob die Distanz nicht innerhalb der Schwellendistanz liegt; Anwenden des Bremsmechanismus, wenn die Gesamtzeitdauer nicht geringer als der Zeitabschnitt ist, auf einen anderen Abschnitt der Bremslösezeit; und
Wiederholen des Bestimmens, bis (i) die Distanz innerhalb der Schwellendistanz liegt, oder (ii) die Anzahl inkrementeller Anpassungen fünf Anpassungen überschreitet.

13. System nach einem der Ansprüche 9 bis 12, wobei
(i) das autonome Fahrzeug (110) eine autonome Sattelzugmaschine ist und die Daten von einem automatischen, schienenmontierten Portal empfangen werden, und/oder
(ii) wobei dann, wenn sich das autonome Fahrzeug (110) innerhalb der Schwellendistanz befindet, ein Container automatisch ohne manuelle Intervention auf dem autonomen Fahrzeug (110) verladen oder von ihm entladen wird,
und wobei dann, wenn die Anzahl von Anpassungen das Anpassungsmaximum überschreitet, ein Alarm ausgelöst wird, um menschlich unterstütztes manuelles Verladen oder Entladen eines Containers auf bzw. von dem autonomen Fahrzeug (110) zu erleichtern.

14. Nicht-flüchtiges Computerprogrammprodukt, das Anweisungen speichert, die bei Ausführung durch mindestens einen Datenprozessor, der einen Teil mindestens einer Rechenvorrichtung ausbildet, Operationen implementieren, die umfassen:
Empfangen von Daten, die (i) eine Angabe, dass sich das autonome Fahrzeug (110) innerhalb von Grenzen einer Andockposition befindet, und (ii) eine Anpassungsdistanz zum Platzieren des autonomen Fahrzeugs (110) innerhalb einer Schwellendistanz von Grenzen der Andockposition umfassen;
Identifizieren, unter Verwendung eines Moduls zur Erkennung eines externen Referenzpunkts, eines externen Referenzpunkts zu dem autonomen Fahrzeug (110); und
inkrementelles Anpassen, unter Verwendung eines Andockmoduls, einer Position des autonomen Fahrzeugs (110) in einer ersten Achse auf Grundlage einer Distanz zwischen dem autonomen Fahrzeug (110) und dem externen Referenzpunkt, bis entweder (i) sich das autonome Fahrzeug (110) innerhalb der Schwellendistanz von Grenzen der Andockposition befindet, oder (ii) eine Anzahl von Anpassungen ein Anpassungsmaximum überschreitet.

15. Nicht-flüchtiges Computerprogrammprodukt nach Anspruch 14, wobei die Operationen ferner ein Verfahren nach einem der Ansprüche 1 bis 8 umfassen.

## Revendications

1. Procédé d'accostage autonome d'un véhicule autonome (110), le procédé comprenant :
la réception (600) de données comprenant (i) une indication selon laquelle le véhicule autonome (110) est situé dans des limites d'un emplacement d'accostage et (ii) une distance d'ajustement pour placer le véhicule autonome (110) à une distance comprise dans une distance de seuil de limites de l'emplacement d'accostage ;
l'identification (604), au moyen d'un module de détection de point de référence extérieur, d'un point de référence extérieur par rapport au véhicule autonome (110) ; et
l'ajustement (606) progressif, au moyen d'un module d'accostage, d'une position du véhicule autonome (110) dans un premier axe, sur la base d'une distance entre le véhicule autonome (110) et le point de référence extérieur, jusqu'à ce que soit (i) le véhicule autonome (110) soit à une distance comprise dans la distance de seuil de limites de l'emplacement d'accostage, soit (ii) un nombre d'ajustements dépasse un maximum d'ajustements.

2. Procédé selon la revendication 1, dans lequel
(i) la distance de seuil est inférieure à 5 centimètres d'une limite dans le premier axe de l'emplacement d'accostage, et/ou
(ii) les données comprennent en outre une pluralité de points de données de détection et télémétrie par la lumière (LiDAR), le point de référence extérieur étant facultativement identifié au moyen du module de détection de point de référence extérieur par : identification, par le module de détection de point de référence extérieur, d'un sous-ensemble de la pluralité de points de données de LiDAR situés dans une zone désignée ; détermination si le sous-ensemble est supérieur à une valeur de seuil ; si le sous-ensemble est supérieur à la valeur de seuil, génération d'une pluralité de groupes dans le sous-ensemble sur la base de distances euclidiennes entre chaque point de donnée de LiDAR ; pour chaque groupe de la pluralité de groupes, détermination d'une distance latérale entre le groupe et un point de référence intérieur (218) sur le véhicule autonome (110) ; et identification d'un groupe de la pluralité de groupes présentant la distance la plus courte dans le premier axe par rapport au point de référence intérieur (218), le groupe présentant la distance la plus courte dans le premier axe et la distance la plus courte par rapport au point de référence intérieur (218) dans un second axe étant facultativement identifié.

3. Procédé selon l'une quelconque des revendications précédentes, dans lequel le point de référence extérieur présente une réflectivité de la lumière qui est d'une intensité supérieure à celle des proches environs du point de référence extérieur.

4. Procédé selon l'une quelconque des revendications précédentes, la position étant ajustée progressivement par une série itérative d'applications et de desserrages d'un mécanisme de freinage du véhicule autonome (110).

5. Procédé selon l'une quelconque des revendications précédentes, dans lequel la position est ajustée progressivement par :
détermination d'un temps de desserrage de frein ; desserrage d'un mécanisme de freinage pendant une partie du temps de desserrage de frein ;
évaluation d'une quantité totale de temps pendant laquelle le mécanisme de frein a été desserré ;
détermination, après le desserrage et l'évaluation, si la quantité totale de temps est inférieure à la partie du temps, si une distance parcourue par le véhicule autonome (110) est comprise dans la distance de seuil, la distance étant comparée à une valeur absolue d'une différence entre la distance et la distance d'ajustement ; et
répétition du desserrage, de l'évaluation et de la détermination si la distance n'est pas comprise dans la distance de seuil, la position étant facultativement encore ajustée progressivement par :
application du mécanisme de freinage, si la quantité totale de temps n'est pas inférieure à la partie du temps, pendant une autre partie du temps de desserrage de frein ; et
répétition de la détermination jusqu'à ce que (i) la distance soit comprise dans la distance de seuil ou (ii) le nombre d'ajustements progressifs dépasse cinq ajustements.

6. Procédé selon l'une quelconque des revendications précédentes, dans lequel le véhicule autonome (110) est un véhicule tracteur autonome et les données sont reçues en provenance d'un portique automatique monté sur rail.

7. Procédé selon l'une quelconque des revendications précédentes, dans lequel, quand le véhicule autonome (110) est à une distance comprise dans la distance de seuil, un conteneur est automatiquement chargé ou déchargé sur le véhicule autonome (110) sans intervention manuelle.

8. Procédé selon l'une quelconque des revendications précédentes, dans lequel, quand le nombre d'ajustements dépasse le maximum d'ajustements, une alarme est déclenchée pour faciliter un chargement ou déchargement manuel assisté par l'humain d'un conteneur sur le véhicule autonome (110).

9. Système comprenant :
au moins un processeur de données ; et
de la mémoire stockant des instructions qui, quand elles sont exécutées par au moins un processeur de données, résultent en des opérations pour la mise en œuvre d'opérations comprenant :
la réception (600) de données comprenant (i) une indication selon laquelle le véhicule autonome (110) est situé dans des limites d'un emplacement d'accostage et (ii) une distance d'ajustement pour placer le véhicule autonome (110) à une distance comprise dans une distance de seuil de limites de l'emplacement d'accostage ;
l'identification (604), au moyen d'un module de détection de point de référence extérieur, d'un point de référence extérieur par rapport au véhicule autonome (110) ; et
l'ajustement (606) progressif, au moyen d'un module d'accostage, d'une position du véhicule autonome (110) dans un premier axe, sur la base d'une distance entre le véhicule autonome (110) et le point de référence extérieur, jusqu'à ce que soit (i) le véhicule autonome (110) soit à une distance comprise dans la distance de seuil de limites de l'emplacement d'accostage, soit (ii) un nombre d'ajustements dépasse un maximum d'ajustements.

10. Système selon la revendication 9, dans lequel
(a) la distance de seuil est inférieure à 5 centimètres d'une limite dans le premier axe de l'emplacement d'accostage, et/ou
(b) les données comprennent en outre une pluralité de points de données de détection et télémétrie par la lumière (LiDAR) et dans lequel le point de référence extérieur est identifié au moyen du module de détection de point de référence extérieur par :
identification, par le module de détection de point de référence extérieur, d'un sous-ensemble de la pluralité de points de données de LiDAR situés dans une zone désignée ;
détermination si le sous-ensemble est supérieur à une valeur de seuil ;
si le sous-ensemble est supérieur à la valeur de seuil, génération d'une pluralité de groupes dans le sous-ensemble sur la base de distances euclidiennes entre chaque point de donnée de LiDAR ;
pour chaque groupe de la pluralité de groupes, détermination d'une distance latérale entre le groupe et un point de référence intérieur (218) sur le véhicule autonome (110) ; et
identification d'un groupe de la pluralité de groupes présentant la distance la plus courte dans le premier axe par rapport au point de référence intérieur (218), le groupe présentant la distance la plus courte dans le premier axe et la distance la plus courte par rapport au point de référence intérieur (218) dans un second axe étant identifié.

11. Système selon une des revendications 9 à 10, dans lequel le point de référence extérieur présente une réflectivité de la lumière qui est d'une intensité supérieure à celle des proches environs du point de référence extérieur.

12. Système selon une des revendications 9 à 11, la position étant ajustée progressivement par une série itérative d'applications et de desserrages d'un mécanisme de freinage du véhicule autonome (110) par :
détermination d'un temps de desserrage de frein ; desserrage d'un mécanisme de freinage pendant une partie du temps de desserrage de frein ;
évaluation d'une quantité totale de temps pendant laquelle le mécanisme de frein a été desserré ;
détermination, après le desserrage et l'évaluation, si la quantité totale de temps est inférieure à la partie du temps, si une distance parcourue par le véhicule autonome (110) est comprise dans la distance de seuil, la distance étant comparée à une valeur absolue d'une différence entre la distance et la distance d'ajustement ;
répétition du desserrage, de l'évaluation et de la détermination si la distance n'est pas comprise dans la distance de seuil ; application du mécanisme de freinage si la quantité totale de temps n'est pas inférieure à la partie du temps, pendant une autre partie du temps de desserrage de frein ; et
répétition de la détermination jusqu'à ce que (i) la distance soit comprise dans la distance de seuil ou (ii) le nombre d'ajustements progressifs dépasse cinq ajustements.

13. Système selon une des revendications 9 à 12, dans lequel
(i) le véhicule autonome (110) est un véhicule tracteur autonome et les données sont reçues en provenance d'un portique automatique monté sur rail, et/ou
(ii) quand le véhicule autonome (110) est à une distance comprise dans la distance de seuil, un conteneur est automatiquement chargé ou déchargé sur le véhicule autonome (110) sans intervention manuelle et dans lequel, quand le nombre d'ajustements dépasse le maximum d'ajustements, une alarme est déclenchée pour faciliter un chargement ou déchargement manuel assisté par l'humain d'un conteneur sur le véhicule autonome (110).

14. Produit-programme d'ordinateur non transitoire stockant des instructions qui, quand elles sont exécutées par au moins un processeur de données faisant partie d'au moins un dispositif informatique, mettent en œuvre des opérations comprenant :
la réception de données comprenant (i) une indication selon laquelle le véhicule autonome (110) est situé dans des limites d'un emplacement d'accostage et (ii) une distance d'ajustement pour placer le véhicule autonome (110) à une distance comprise dans une distance de seuil de limites de l'emplacement d'accostage ;
l'identification, au moyen d'un module de détection de point de référence extérieur, d'un point de référence extérieur par rapport au véhicule autonome (110) ; et
l'ajustement progressif, au moyen d'un module d'accostage, d'une position du véhicule autonome (110) dans un premier axe sur la base d'une distance entre le véhicule autonome (110) et le point de référence extérieur jusqu'à ce que soit (i) le véhicule autonome (110) soit à une distance comprise dans la distance de seuil de limites de l'emplacement d'accostage soit (ii) un nombre d'ajustements dépasse un maximum d'ajustements.

15. Produit-programme d'ordinateur non transitoire selon la revendication 14, dans lequel les opérations comprennent en outre un procédé selon une des revendications 1 à 8.
